**Europäisches Patentamt**

**European Patent Office**

**Office européen des brevets**

(19)

(11) Publication number: **0 115 321**
A2

(12) **EUROPEAN PATENT APPLICATION**

(21) Application number: **84100693.5**

(22) Date of filing: **24.01.84**

(51) Int. Cl.³: **B 05 B 15/04**
**B 05 C 15/00**

(30) Priority: **27.01.83 US 461395**

(43) Date of publication of application:
**08.08.84 Bulletin 84/32**

(84) Designated Contracting States:
**BE DE FR GB IT**

(71) Applicant: **NORDSON CORPORATION**
**555 Jackson Street P. O. Box 151**
**Amherst Ohio 44001(US)**

(72) Inventor: **Newman, Allen R.**
**4509 Infinity Lane**
**Lorain Ohio(US)**

(72) Inventor: **Marino, Frank P.**
**15 Suburban Avenue**
**Cos Cob Connecticut(US)**

(74) Representative: **Eisenführ & Speiser**
**Martinistrasse 24**
**D-2800 Bremen 1(DE)**

(54) **Improved powder spray booth and powder recovery system.**

(57) A spray booth is disclosed for applying powder coating to substrates. There is a self contained recovery/filter system associated with the booth, which recovery/filter system is so constructed that there are no restrictions in the air flow passages between the booth and the recovery/filter system, with the result that there are no confined areas wherein fires may cause explosions. Powder is collected in air slides located in the bottom of the recovery/filter system. The air slides transfer the collected powder via a sloping fluidized bed to air transfer pumps which are operative to convey the collected powder back to a recycle system. In order to expose a maximum surface area of a complex shaped workpiece to powder coverage with a minimum number of spray guns, the workpieces are rotated during the course of passage through the booth. Rotation of the workpiece is effected by supporting the workpieces upon the top of rotatable conveyorized shafts which extend upwardly through seals located in the floor of the booth.

Fig. 1

This invention relates generally to the powder coating art, and more particularly relates to a powder spray booth and powder recovery system.

In the practice of powder coating, a powdered resin is applied to a substrate, and then the substrate and powder are heated so that the powder melts and when subsequently cooled, forms a solid continuous coating on the substrate. The powder is generally sprayed onto the substrate while entrained in an air stream. An electrostatic charge is generally applied to the sprayed powder so as to enhance the quantity of powder which attaches to the substrate and to assist in retaining the powder on the substrate. These electrostatic powder spraying techniques are well known and widely practiced commercially.

By and large, powder deposition is performed in a booth, a controlled area wherein any oversprayed powder which is not deposited on the substrate is collected. Conventionally, the containment of the powder in the booth is aided by an exhaust system which creates a negative pressure within the booth and causes the oversprayed powder to be drawn out of the booth to powder recovery filtering devices. In some systems, the oversprayed powder is collected and is merely saved for future use, while in others it is recycled automatically to the application device. In very nearly all powder spray applications though, the oversprayed material must be collected and recycled since it generally represents substantially more than half of the sprayed material.

Collection of the oversprayed material generally involves entraining the oversprayed powder in an air stream withdrawn from the powder booth, conveying that powder entrained air stream to a powder recovery system and there separating the powder from the air. Commonly, the separation is effected by some form of filter or cyclone separator.

One of the most critical aspects of all powder recovery systems is that of avoiding explosions of the powder conveying and recovery equipment. Very nearly all burnable powders, when entrained in air in burnable concentrations, are subject to burning and explosion and powdered resins or paints are no exception. The powder spray booth of this invention eliminates explosion hazards by venting the powder recovery system and the powder collection chamber of the system back into the spray booth without any substantial air flow restrictions between the powder collection chamber and the spray booth. Consequently, if a fire does occur in the spray booth, and spreads to the powder recovery chamber, there is no opportunity for an explosion because there is no place within the system for a pressure build-up and consequent explosion.

The powder spray booth of this invention collects oversprayed powder in an air stream withdrawn from the bottom of the booth and then turned and conveyed upwardly through a filter chamber to a clean air chamber. Beneath the filter chamber there are air slides within which the oversprayed powder is collected, fluidized, and flowed to a venturi pump operative to return the collected powder to a recycle system.

There has been a problem with powder spray booths of this type in connection with the spraying of complex shaped

-2-

workpieces so as to obtain complete surface powder coverage. In general, this problem has heretofore been approached by placement of a plurality of spray guns in the spray booth so positioned as to direct air entrained powder at all of the complex surfaces of the workpieces. But this involves spraying of more powder through more guns than is generally required but for the need to reach otherwise unexposed surfaces.

It has therefore been an objective of this invention to provide a powder spray booth and powder recovery system which enables complex workpiece shapes to be sprayed with powder using a minimum number of guns and a minimum quantity of powder to achieve complete surface coverage of complex shaped workpieces.

The improved powder spray booth of this invention which achieves this objective comprises a spray booth having an attached powder recovery system which in the preferred embodiment is located underneath and to one side of the floor of the booth. The recovery system comprises a powder collection chamber below the booth, and a clean air chamber sealed from the booth and from the powder collection chamber, but being provided with an opening from the collection chamber into the clean air chamber through static filters. A blower is provided to create negative pressure in the chamber so that powder laden air is drawn down through the opening in the floor of the booth into the collection area immediately below the booth, and thence upward through filters to the clean air chamber. This filtered air having only traces of fine powder in a non-explosive ratio, is withdrawn from the clean air chamber through the blower, and passed to an

-3-

absolute filter for final filtering. The powder collection chamber is open to the interior of the spray booth through a relatively unrestricted opening so that any fire in the powder collection chamber is directly vented into the booth without any significant restriction therebetween. The bottom of the powder collection chamber is defined by a plurality of sloping walls, fluidized bed air slides, the bottoms of which are open to powder pumps operative to pump the collected powder back to a recycle system. The bottom of the booth is defined in part by a pair of overlapping flexible seals through which there protrude conveyorized rotatable shafts. The upper ends of these shafts support workpieces for passage through the booth while the lower ends of the shafts are conveyorized and driven in rotation.

The primary advantage of this invention is that it enables complex shaped workpieces to be efficiently coated with powder in a relatively small, compact powder spray system.

These and other objects and advantages of this invention will be more readily apparent from a description of the drawings in which:

Figure 1 is a side elevational view, partially in cross-section of a powder spray booth and powder recovery/collection system in accordance with the invention of this application.

Figure 2 is a front elevational view of the system as seen on line 2-2 of Figure 1.

Figure 3 is a diagrammatic view as seen on line 3-3 of Figure 2.

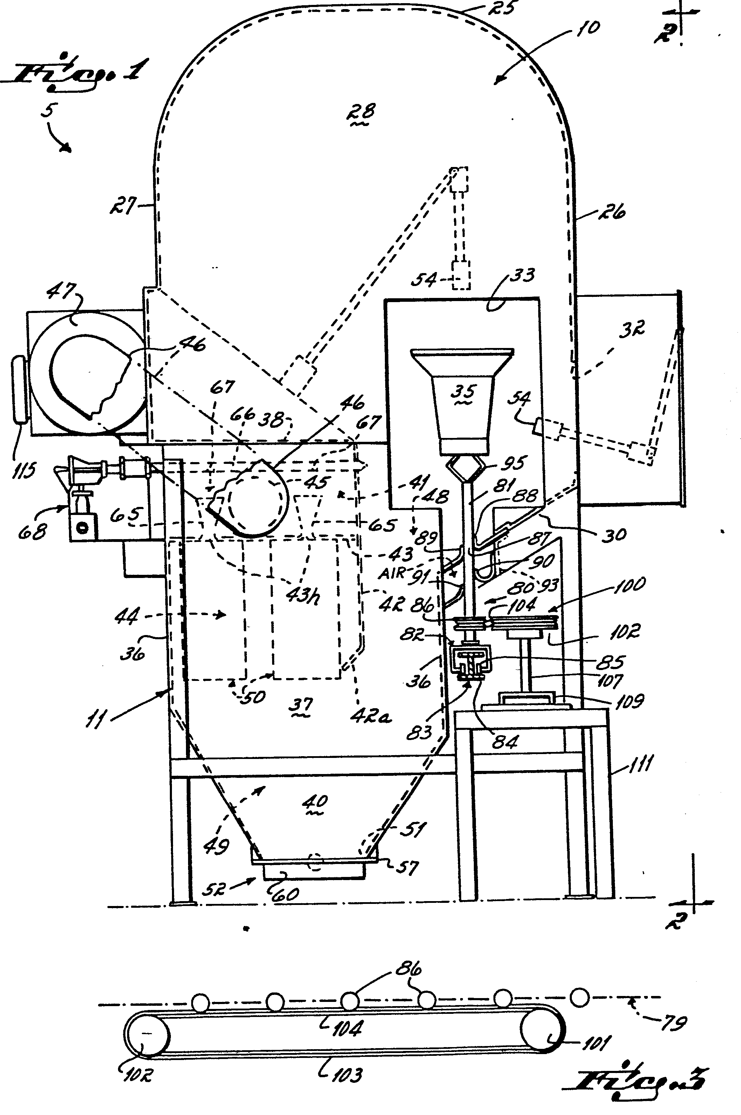

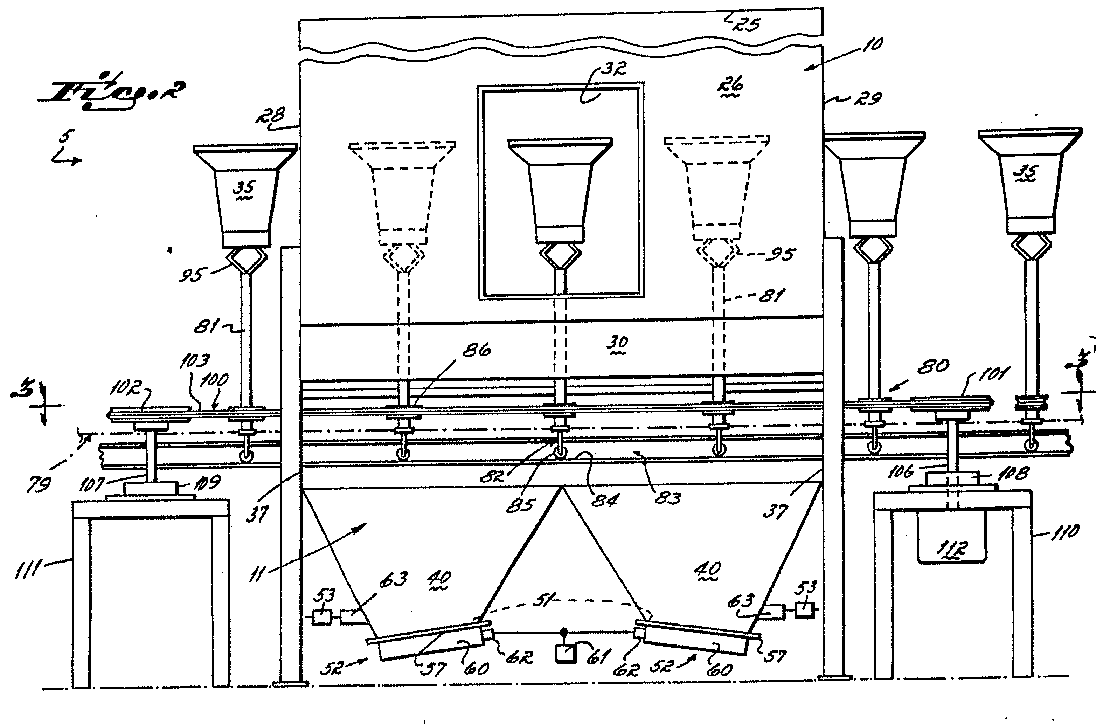

Referring first to Figure 1, a system 5 incorporating the invention of this application comprises a spray booth 10 and powder recovery system 11. The spray booth 10 defines a controlled area for spraying powder and comprises generally a ceiling portion 25, opposed side walls 26, 27, opposed end walls 28, 29 and a floor 30. Openings are provided in one of the side walls 26 of the booth 10 and both end walls 28, 29. The opening 32 in the side wall 26 provides access into the interior of the booth 10 for spraying equipment, or for access for a man to enter the booth himself. Openings 33 are provided in each end wall 28, 29 for product or workpieces 35 to be transported through the booth 10 for spraying.

The powder recovery system 11 is generally comprised of opposed side walls 36, end wall 37, an upper wall 38, and a pair of funnel shaped bottom walls 40. An enclosed clean air chamber 41 is located below the upper wall 38 and is defined between end walls 37, part of the exterior side wall 36, the upper wall 38, part of an inner side wall 42, and a bottom chamber wall 43. A filter chamber 44 is located below the clean air chambers 41, the filter chamber 44 being defined by the walls 36, 37, 42 and 43.

A hole 45 in one end wall 37 connects the clean air chamber 41 through the ductwork 46 to the intake of an exhaust fan 47 operative to create a negative pressure in the clean air chamber 41.

The interior side wall 42 extends downward from the upper wall 38 and forms an air flow passage 48 directly from the interior of the booth into powder collection chamber 49. The air flow passage 48 is elongated in the direction of travel of the articles to be coated and extends across the whole length of the booth 10. It is of substantial cross sectional area so as not to present a restriction which would result in a "confined area" subject to explosion in the event of a fire in the powder collection chamber 49.

-5-ᴬ

The clean air chamber 41 is provided with multiple holes 43h on the underside through the bottom walls 43. Each of these holes 43h is capped by a static cartridge type filter 50. The filters 50 can be removably attached to the wall 43 by any suitable means. In a preferred embodiment the holes in the bottom wall 43 of the clean air chamber 41, and associated filter elements 50, are arranged in banks of filters.

As mentioned hereinabove, the powder collection chamber 49 is located beneath the filter chamber 44. The bottom of the filter chamber 49 is formed by a pair of funnel shaped bottom walls 40 which taper downwardly into a pair of openings 51. Each of these openings 51 is capped by an air slide 52 within which oversprayed powder or powder filtered out of the air by the filters 50 is collected. At the outer end of each air slide 52 is a venturi pump 53 or other suitable means to receive the powder from the hopper and to transport the collected powder to a recycling system which may be in the form of a storage bin or may be directed back to the spray guns 54 from which the powder was originally ejected into the booth.

The air slides 52 are each provided around their upper edges with a laterally extending flange 57, which flange is secured by bolts (not shown) to a correspondingly shaped flange which extends outwardly from the bottom openings 51 of the walls 40.

Each air slide 52 comprises an outwardly and downwardly sloping bottom wall (not shown) which is formed from an air pervious membrane so that air from an air pressure source 61 may be forced upwardly through the bottom wall to fluidize powder contained within the air slide.

Beneath the bottom wall of each air slide 52 there **0115321**
is a closed air chamber 60 formed by side walls and a bottom
wall. Air at a pressure above that of the atmosphere is
supplied to the closed air chamber 60 from an air pressure
source 61. This air pressure flows from the source through
pressure regulators to an air inlet port 62 in the side wall
of each chamber 60. This air pressure passes upwardly through
the air pervious bottom wall membrane where it is operative to
fluidize any powder or load within the interior of the air slide.
Because the bottom wall of the air slide slopes outwardly, preferably at an angle of approximately five degrees, the fluidized
powder tends to move outwardly toward an outlet conduit 63 which
connects the interior of the air slide to one of the venturi pumps
53.

Interiorly of the clean air chamber 41, venturi throats
65 are situated above and around each of the holes 43h through
which filtered air passes. A series of pipes 66 extend across
the clean air chamber 41, one each in alignment with a pair of
venturi throats 65, and hence the filters 50, across in a row.
Each of the pipes 66 has two holes (as at 67) in its underside
which are aligned one each with a respective venturi throat 65.
An air solenoid 68 associated with each pipe 66 and mounted exteriorly of one outside wall 36 is effective to discharge a 15
to 20 millisecond burst of air into a respective pipe 66, and
thus out of the holes 67 in the underside of the pipe 66 into each
venturi throat 65. The burst causes momentary reverse air flow
through the filters 50, and dislodges collected powder from the
filter material. The dislodged powder falls into a respective
air slide 52. The solenoids 68 are sequentially operated through them relative to the stationary spray guns 54. Rotation of the parts 35 relative to the spray guns exposes a maximum area of the parts to the spray of air entrained electrostatic charged powder emitted from the guns 54.

The conveyor 80 comprises a plurality of vertically extending shafts 81 supported for rotation upon roller brackets 82. These brackets 82 are interconnected by a drive chain or drive means 79 and are supported upon a rail 83 which extends for the length of the booth beneath the floor 30. The brackets 82 are generally C-shaped and wrap around the top of the rail 83. The ends of the C-shaped brackets have rollers 85 mounted thereon which ride over the top surface of the lower flange 84 of the rail 83.

In order to effect rotation of the shafts 81 and of the parts 35 mounted atop the shafts, each shaft has a pulley 86 non-rotatably keyed thereto. This pulley is located between the top of the bracket 82 and the bottom 30 of the booth 10.

In the course of rotation of the shafts 81, workpiece supports 95 mounted atop the shafts are rotated together with the shafts. In the illustrated embodiment, the workpiece supports 95 are each in the form of a pair of spring biased forks engageable with the inside surface of a workpiece 35. The support though could take the form of a magnetic support or any other conventional holder for securing a workpiece to the shaft 81 for rotation with the shaft 81.

The vertically extending shafts 81 of the conveyor 80 extend upwardly through a slot 87 in the floor of the booth 30. This slot is closed by an upper pair of overlapping resilient flaps or seals 88, 89 and a lower pair of parallel overlapping resilient seals 90, 91. In a preferred embodiment the seals are made from polyurethane.

any suitable control mechanism well known in the art, so that only one bank or row is cleaned at a time. Therefore, there is no net interruption of the air flow through the filter/collector unit 11.

It should be noted that the quantity or type of filter 50 is selected in this embodiment to achieve improved filter cleaning capabilities. It has been noted that the velocity of powder burdened air penetrating the filters 50 is directly related to the total surface area of a filter or banks of filters 50. An increased filter surface area was found to be particularly desirable to reduce powder penetration into the filtering elements of the filters 50 because the velocity of the air across the filter medium was substantially reduced. This facilitates cleaning by blow-back or reverse air flow as hereinbefore described. Also, the reduced velocity achieved by increased surface area of the filters 50 minimizes the amount of powder that returns to the surface of each filter 50 after a reverse air burst. The filters 50 individually and collectively thus operate more efficiently while minimizing powder build-up in the filtering area. Overall air flow through the collection chamber is thus maintained. In turn, the efficiency of the fan or blower 16 is sustained along with that of the overall booth 10. In this particular embodiment, each of the numbers and type of filters is selected so that the velocity of the air passing therethrough is about 1.8 feet per minute for an air flow through the booth 10 and fan 47 of about 1.8 cubic feet per minute.

According to the practice of this invention, workpieces or parts 35 to be coated with powder within the booth 10 are transported through the booth upon a conveyor 80 which is operative to carry the parts through the booth while simultaneously rotating

In the course of passage through the booth the shafts 81 force the overlapping seals apart so as to permit the shafts to move through the slot closed by the seals. As a consequence of the double seal arrangement provided by seals 88, 89, 90, 91, powder sprayed onto workpieces 35 passing through the booth does not fall downwardly onto the pulley and drive mechanism for the pulley located beneath the booth. Furthermore, the negative pressure created by the fan 47 within the booth acts in conjunction with the seals to prevent egress of powder from the booth through the seals. In the preferred embodiment, the chamber defined by seals 88, 89, 90, 91, end walls 28, 29, sidewall 36 and front wall 93 is supplied wth a gas, such as air, at a pressure above that of the atmosphere. A source of air at a pressure above that of the atmosphere can be provided by a conventional blower. In operation it is preferred to supply air to this chamber at a rate of approximately 3 standard cubic feet per minute.

In order to drive the pulleys 86 and attached shafts 81 in rotation during the course of passage through the booth, a belt drive 100 extends parallel to the rail 83. This belt drive 100 comprises a driving pulley 101 and an idler pulley 102 between which there extends an endless driven blet 103. The rearwardmost run 104 of this belt is engageable with the pulleys 86 upon the shafts 81 so as to drive those pulleys as the pulleys move over the run 104 of the belt or chain 103.

The pulleys 101, 102 are both mounted upon vertically extending shafts 106, 107 respectively. These shafts are in turn journalled for rotation in bearing blocks 108, 109 mounted atop supporting frames 110, 111 respectively. The shaft 106 of the driving pulley 101 is driven from a motor or shaft driving means 112, the speed of which is adjustable to control the rotational speed of the articles as they are conveyed through the spray booth.

The conveyor 80, including the endless belt for driving the shafts 81 of the conveyor, are conventional commercially available equipment which has long been available commercially in the prior art and used in the spraying of wet paint onto rotating parts. To our knowledge though, such a conveyor has never been used in a powder spray environment or in any environment wherein a negative pressure is maintained in the booth for withdrawing oversprayed material or powder from the booth.

In operation of the booth 10 and powder recovery unit 11, the blower 47 is first activated so as to create a negative pressure in the clean air chamber 41 and thereby cause air flow inwardly from outside the booth through the side wall opening 32 and end wall openings 33. This air flow, after passing through the booth, flows downwardly through the air flow passage 48 and into the powder collection chamber 49. The air flow then is caused to change in direction from the generally downward direction in which it is moving as it flows past the bottom edge 42a of the wall 42 into an upwardly directed air flow into the filter chamber 44 through the filters 50, and into the clean air chambers 41. The clean air is then caused to flow through the ductwork 46 to and through an absolute filter 115 wherein any tracted. The filter cartridges 50 are generally effective to extract more than 99% of the powder entering the powder recovery system 11 so that very little powder reaches the aboslute filter 115. Clean air is then exhausted from the absolute filter 115 back into the plant or to atmosphere.

As soon as the air flow is initiated by the fan or blower 47, the powder may be turned on and sprayed via guns or any other conventional applicators 54 into the booth and onto parts 35 as the parts are conveyed through the booth upon the rotating shafts 81. Conventionally, the powder particles are charged with a very high voltage electrostatic charge and the parts are grounded. The electrostatic charge increases the

-11ᴬ-

percentage of powder depostied onto the parts and assists in retaining those particles on the parts. All oversprayed powder is maintained in the booth via the incoming air flow through the booth openings. The oversprayed material either falls by gravity to the bottom of the booth or becomes entrained in the air flow moving downwardly in the booth into the air flow passage 48. Most of the powder entering that passage 48 falls by gravity to the bottom of the powder collection chamber and onto one of the air slides 52. A substantial portion of the airborne remainder of powder is caused by a combination of gravity and centrifugal force to fall out of the air and collect on the air slides 52 as the air flow is changed from a generally downward direction in the center chamber 48 to an upward direction into the filters 50. A small percentage of the powder collects on the exterior of the filter cartridges 50 and that surface collected powder is periodically removed from the surfaces by reverse burst of air flow through the air flow pipes 66 and holes 67 as was explained hereinabove. That short burst of reverse air flow, which burst is on the order of a fraction of a second in duration, causes any powder adhered to the cartridge to be dislodged and fall to the bottom of the air slides 48. Within the air slides, the powder is fluidized by air flow moving upwardly through the air pervious bottom wall from the bottom air chamber 60. This fluidized powder gradually moves outwardly and downwardly over the sloping bottom wall of the air slides until, at the outer wall of the air slide, the powder is picked up by the venturi pump 53 and pumped back to a recycle system as is conventional in this art.

Simultaneously with the initiation of powder spray from the guns 54 the motor or driving means 112 of the conveyor 80 are actuated for driving the shafts 81 in rotation and the mechanism driving the shaft supporting brackets over the rails 83 is actuated so as to cause the rotating shafts to be moved through the powder spray booth 10. The motor or drive means 112 are operative to drive the driven pulley 101 and the endless belt or chain 102 which in turn is operative to engage and rotate the pulleys 86 attached to each of the shafts 81 and thereby the shafts are caused to rotate together with the workpieces 35 supported atop the shafts 81. Because the workpiece is rotated relative to spray guns 54, powder emitted from a minimum number of guns contacts all of the peripheral surfaces of relatively complex workpieces 35. Thereby, the number of guns required to effect complete coverage of the exterior surface of the workpiece is minimized. As the number of guns is reduced, the quantity of powder required to be sprayed and required to be recovered from the system is reduced, thereby minimizing the cost of operation of the system.

While we have described only a single preferred embodiment of the invention, persons skilled in this art will appreciate other changes and modifications which may be made without departing from the spirit of our invention. As an example, those persons will appreciate that the shape of the booth and the location of the recovery system relative to the booth exhaust vent may be varied without departing from the spirit of our invention. Therefore, we do not intend to be limited except by the scope of the following appended claims.

We claim:

(1)  . A powder spray booth and powder recovery system comprising:

booth means providing a controlled area in which to powder coat substrates, defined generally by a ceiling, side and end walls, and a floor;

powder spray means for directing powder contained air into said spray booth means,

a powder collection chamber in close proximity to the booth;

a substantially unrestricted flow path leading directly from said powder collection chamber into said booth;

a clean air chamber sealed from the booth and from the powder collection chamber, said clean air chamber being provided with an opening from the powder collection chamber into said clean air chamber;

static filter means located within said powder collection chamber and operative to effectively prevent powder from entering said clean air chamber;

blower means operative to create a negative pressure in said clean air chamber;

said powder collection chamber including funnel shaped side walls;

means for removing collected powder from the bottom of said powder collection chamber;

rotatable shaft means extending upwardly through said floor of said booth;

. conveyor means for transporting said rotatable shaft means longitudinally through said booth,

2                          0115321

(1) cont.    means for securing a workpiece to the top of said rotatable shaft means, and

        means for rotating said rotatable shaft means during the course of passage through said booth means.

(2)     The system of Claim 1 in which said powder collection chamber includes an upper section and a lower section, said lower section including a powder collection hopper having funnel shaped side walls.

(3)     The powder spray booth and powder recovery system of Claim 2 in which said powder removing means comprises a venturi pump for transporting collected powder from the bottom of said hopper to a powder recycling system.

(4)     The system of Claim 1 in which said floor of said booth includes a pair of flexible overlapped seals defining a slot therebetween, and said rotatable shaft means extending upwardly through said slot.

(5)     The system of Claim 1 in which said floor of said booth includes two pairs of flexible seals, each pair of said seals being overlapped and defining a slot therebetween, said pair of seals being oriented with one pair of seals located above the other pair, and said rotatable shaft means extending upwardly through said slots.

(6)      The system of Claim 1 in which said rotatable shaft means comprises a plurality of vertically extending shafts, each of said shafts having a pulley attached thereto, and endless drive means engageable with said pulley during the course of passage of said shafts through said booth means.

(7)      The system of Claim 6 in which said floor of said booth includes a pair of flexible overlapped seals defining a slot therebetween, said rotatable shafts extending upwardly through said slot during the course of passage through said booth, and said pulleys being attached to said shafts below said seals such that said seals protect said pulleys and said endless drive means from contact with powder falling from said booth.

(8)      A powder spray booth and powder recovery system comprising:

booth means providing a controlled area in which to powder coat substrates, defined generally by a ceiling, side and end walls, and a floor;

powder spray means for directing powder entrained air into said spray booth means,

a powder collection chamber in close proximity to the booth; said powder collection chamber including an upper section and a lower section, said lower section including a powder collection hopper having funnel shaped side walls;

a substantially unrestricted flow path leading directly from said powder collection chamber into said booth;

a clean air chamber sealed from the booth and from the powder collection chamber, said clean air chamber being provided with an opening from the powder collection chamber into said clean air chamber;

static filter means located within said upper section of said powder collection chamber and operative to effectively prevent powder from entering said clean air chamber;

blower means operative to create a negative pressure in said clean air chamber;

means for removing collected powder from the bottom of said powder collection hopper;

said floor of said booth means being defined in part by a pair of flexible overlapped seals,

a plurality of rotatable shafts extending upwardly between said pair of seals,

conveyor means for transporting said rotatable shafts longitudinally through said booth,

0115321

(8) cont.  means for securing a workpiece to the top of each of said rotatable shafts, and

means for rotating said shafts during the course of passage through said booth means.

(9)     The system of Claim 8 further comprising a pressure chamber located beneath said flexible seals and means for supplying said pressure chamber with a gas at a pressure above that of the atmosphere.

(10)     The system of Claim 9, further comprising a second pair of flexible overlapped seals, said second pair of seals being located beneath said pair of overlapped floor seals, said rotatable shaft means extending upwardly between both of said pairs of seals, a pressure chamber defined in part by both of said pairs of seals and means for supplying air at a pressure greater than that of the atmosphere to said pressure chamber.

*Fig. 1*

*Fig. 3*

0115321